Europäisches Patentamt

European Patent Office

Office européen des brevets

(11) Veröffentlichungsnummer: **0 325 724 B1**

(19)

(12) # EUROPÄISCHE PATENTSCHRIFT

(45) Veröffentlichungstag der Patentschrift: **21.10.92**

(51) Int. Cl.⁵: **F16F 15/12**

(21) Anmeldenummer: **88119538.2**

(22) Anmeldetag: **24.11.88**

(54) **Geteiltes Schwungrad.**

(30) Priorität: **26.01.88 DE 3802106**

(43) Veröffentlichungstag der Anmeldung:
**02.08.89 Patentblatt 89/31**

(45) Bekanntmachung des Hinweises auf die
Patenterteilung:
**21.10.92 Patentblatt 92/43**

(84) Benannte Vertragsstaaten:
**ES FR GB IT**

(56) Entgegenhaltungen:
**EP-A- 0 259 173**
**DE-A- 3 629 225**
**FR-A- 2 577 642**
**GB-A- 2 163 524**

(73) Patentinhaber: **Daimler-Benz Aktiengesellschaft**
**Postfach 600202 Mercedesstrasse 136**
**W-7000 Stuttgart 60(DE)**

(72) Erfinder: **Wörner, Günter**
**Falkenstrasse 13**
**W-7053 Kernen(DE)**
Erfinder: **Tscheplak, Ernst**
**Nordhaldenstrasse 49**
**W-7056 Weinstadt 1(DE)**

## Beschreibung

Die Erfindung betrifft ein geteiltes Schwungrad mit zwei zueinander gleichachsig angeordneten Schwungradelementen, auf die die Schwungmassen im wesentlichen aufgeteilt sind, sowie mit einer zwischen die Schwungradelemente geschalteten Federanordnung, welche zumindest zwei parallelgeschaltete Federgruppen besitzt, von denen eine mit Spiel behaftet ist, und mit einer zwischen den beiden Schwungradelementen wirksamen kraftschlüssigen Kupplung.

Bei einem aus der DE-A-3 629 225 bekannten derartigen geteilten Schwungrad ist zumindest ein Teil der zwischen den Schwungradelementen angeordneten kraftschlüssigen Kupplung dauernd wirksam. Ein anderer Kupplungsteil ist spielbehaftet, d.h. ohne Wirksamkeit innerhalb eines gewissen Drehwinkels. Wird dieser Drehwinkel durch eine Relativbewegung zwischen den Schwungradelementen aufgezehrt, so wird auch der andere Kupplungsteil wirksam; sobald sich dann die Richtung der Relativbewegung der Schwungradelemente umkehrt, muß zunächst jeweils das gesamte Spiel der anderen Kupplung aufgezehrt werden, bis dieselbe auch in dieser Richtung der Relativbewegung wirksam werden kann.

Dieses bekannte geteilte Schwungrad hat noch kein optimales Verhalten.

Grundsätzlich soll ein geteiltes Schwungrad im sogenannten überkritischen Bereich arbeiten, d.h. die Frequenz der beim Fahrbetrieb vom Motor angeregten Schwingungen soll oberhalb der Resonanzfrequenz des geteilten Schwungrades liegen; gleichzeitig soll ein möglichst verschwindender Kraftschluß zwischen den Schwungradelementen vorliegen. Falls beide Bedingungen gewährleistet sind, werden Antriebsstrang und Motor praktisch vollständig voneinander schwingungsmäßig entkoppelt. Bei geringen Motordrehzahlen und insbesondere in der Nähe der Leerlaufdrehzahl des Motors läßt sich ein Betrieb des geteilten Schwungrades im überkritischen Bereich nicht ohne weiteres gewährleisten, denn bei diesen Drehzahlen sind die Resonanzfrequenz des Schwungrades und die Frequenzen der vom Motor erregten Schwingungen nahe benachbart, unter Umständen stimmen sie sogar überein. In dieser Betriebsphase ist grundsätzlich ein großer Kraftschluß zwischen den Schwungradelementen erwünscht, um zu vermeiden, daß aufgrund von Resonanzeffekten übermäßig große Schwingungsamplituden auftreten.

Bei dem aus der DE-A-3 629 225 bekannten Schwungrad kann nun weder bei höheren Drehzahlen noch bei Leerlaufdrehzahl ein maximaler Komfort gewährleistet, denn bei höheren Drehzahlen, d.h. beim normalen Fahrbetrieb eines Kraftfahrzeuges, läßt sich die wünschenswerte vollständige schwingungsmäßige Entkupplung von Motor und Antriebsstrang aufgrund der immer wirksam bleibenden einen Kupplung nicht erreichen.

Deshalb ist es Aufgabe der Erfindung, ein geteiltes Schwungrad zu schaffen, welches unter allen Betriebsbedingungen eine optimale schwingungsmäßige Abtrennung zwischen Motor und Antriebsstrang ermöglicht, ohne bei Lastwechseln oder beim Durchlaufen des Resonanzbereiches Relativbewegungen der Schwungradelemente mit übergroßen Amplituden zuzulassen.

Diese Aufgabe wird bei einem Schwungrad der eingangs angegebenen Art dadurch gelöst, daß die kraftschlüssige Kupplung spielbehaftet ist, indem deren Reibelemente bzw. -lamellen zumindest mit einem Schwungradelement mit Spiel in Umfangsrichtung verbunden sind, und daß die Federkonstanten der Federgruppen so bemessen sind, daß die Frequenzen der bei Anlaß- bzw. Leerlaufdrehzahl des Motors erregbaren Schwingungen oberhalb einer niedrigen, durch die spielfreie Federgruppe bestimmten, ersten kritischen Frequenz und die Frequenzen der bei Betriebsdrehzahl erregbaren Schwingungen oberhalb einer höheren, gemeinsam durch beide Federgruppen bestimmten, zweiten kritischen Frequenz des Schwungrades liegen.

Bei der Erfindung wird die Tatsache ausgenutzt, daß ein Motor mit interner Verbrennung bei niedrigen Drehzahlen ein äußerst geringes Drehmoment aufweist und dementsprechend auch die Federanordnung zwischen den Schwungradelementen allenfalls nur geringe Drehmomente übertragen muß. Diese geringen Drehmomente können allein von der spielfreien Federgruppe aufgenommen werden, ohne die spielbehaftete Federgruppe zu belasten. Damit wird die Resonanzfrequenz des Schwungrades bei Übertragung sehr geringer Drehmomente im wesentlichen allein durch die spielfreie Federgruppe bestimmt, mit der Folge, daß die Resonanzfrequenz einen außerordentlich niedrigen Wert hat. Somit können bereits die bei sehr geringen Drehzahlen angeregten Schwingungen, welche eine sehr niedrige Frequenz haben, im überkritischen Bereich des Schwungrades liegen. Damit ist das erfindungsgemäße Schwungrad auch für moderne Motoren mit sehr niedriger Leerlaufdrehzahl geeignet.

Sobald größere Drehmomente übertragen werden sollen, wird neben der spielfreien Federgruppe auch die spielbehaftete Federgruppe wirksam. Dies hat zwar zur Folge, daß die Resonanzfrequenz des Schwungrades entsprechend erhöht wird. Da jedoch der Motor größere Drehmomente nur bei höheren Drehzahlen erzeugen kann und die bei höheren Drehzahlen erzeugten Schwingungen eine höhere Frequenz haben, bleiben die im Antriebsstrang bzw. vom Motor angeregten Schwingungen im überkritischen Bereich des Schwungrades.

Darüber hinaus ist vorteilhaft, daß die beiden Federgruppen gemeinsam eine große Steifheit haben können und dementsprechend die maximale Relativdrehung zwischen den Schwungradelementen vergleichsweise gering bleibt. Damit werden eine unerwünschte Elastizität des Antriebsstranges bei Lastwechseln sowie unerwünscht große Schwingungsamplituden der Schwungradelemente während der Startphase vermieden.

Beim Normalbetrieb, d.h. solange das Schwungrad im überkritischen Bereich arbeitet, verändert die spielbehaftete Kupplung das Verhalten des Schwungrades praktisch nicht, weil sich die Kupplung unter dem Einfluß von Relativbewegungen der Schwungradelemente innerhalb kürzester Zeit so einstellt, daß die auftretenden Schwingungen, welche im überkritischen Bereich nur geringe Schwingungsamplituden haben, innerhalb des Spielbereiches liegen.

Andererseits wirkt die spielbehaftete Kupplung insbesondere während der Startphase im Sinne einer Begrenzung der Schwingungsamplituden, da bei Aufzehrung des Spieles ein zusätzlicher Widerstand zwischen den Schwungradelementen im Sinne einer Abbremsung von Relativbewegungen der Schwungradelemente wirksam wird.

Im Hinblick auf ein möglichst stoßfreies Arbeiten des Schwungrades ist vorteilhaft, wenn das Kupplungsspiel etwas größer als das Spiel der einen Federgruppe ist.

Im übrigen kann in Reihe zu den parallelgeschalteten Federgruppen eine weitere kurzhubige steife Federgruppe angeordnet sein, zu der bevorzugt eine kraftschlüssige Reibkupplung parallelgeschaltet ist. Diese weitere Federgruppe dämpft zusammen mit der parallelgeschalteten Reibkupplung überstarke Bewegungen, die die Schwungradelemente gelegentlich unter sehr ungünstigen Umständen ausführen können, beispielsweise wenn bei mehreren Startversuchen die Resonanzfrequenz des Schwungrades über eine längere Zeit hin angeregt wird.

Im übrigen wird hinsichtlich bevorzugter Merkmale auf die Unteransprüche sowie die nachfolgende Erläuterung einer besonders bevorzugten Ausführungsform anhand der Zeichnung verwiesen.

Dabei zeigt

Fig. 1 einen Axialschnitt des erfindungsgemäßen Schwungrades,

Fig. 2 eine teilweise aufgerissene Stirnansicht des Schwungrades entsprechend dem Pfeil II in Fig. 1,

Fig. 3 ein abstrahiertes Funktionsschema des in den Figuren 1 und 2 dargestellten Schwungrades und

Fig. 4 ein Diagramm, welches die zwischen den Schwungradelementen wirksamen Kräfte bzw. Widerstände bei Relativdrehung der Schwungradelemente wiedergibt.

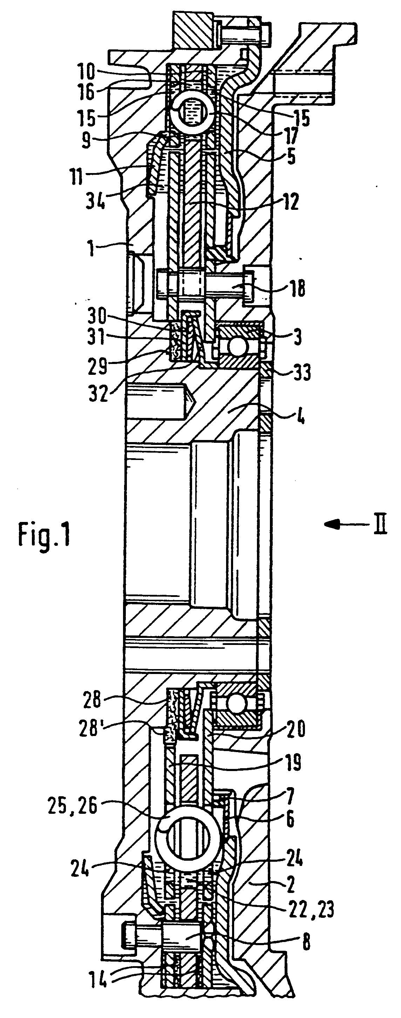

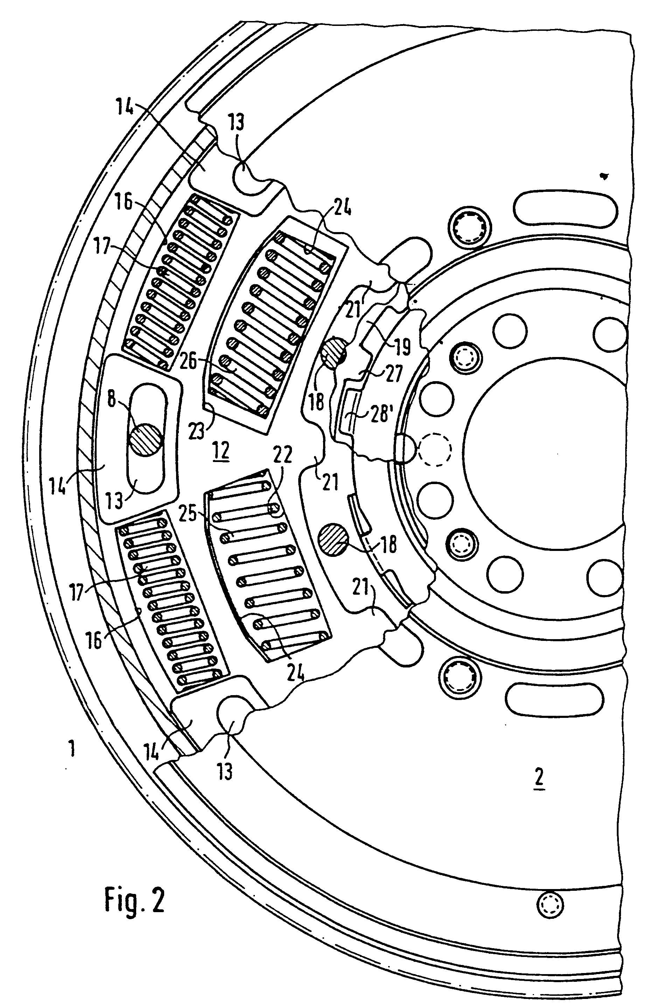

Das in den Figuren 1 und 2 dargestellte geteilte Schwungrad besitzt ein motorseitiges Schwungradelement 1 sowie ein über eine nicht dargestellte Kupplung mit einem Antriebsstrang gekoppeltes Schwungradelement 2, welches mittels eines Rillenkugellagers 3 auf einem Nabenteil 4 des Schwungradelementes 1 drehgelagert ist. An einem umfangsseitigen, dem Schwungradelement 2 zugewandten Ringsteg des Schwungradelementes 1 ist mittels kranzförmig angeordneter Schrauben ein Ringscheibenteil 5 angeflanscht, welches zusammen mit dem Schwungradelement 1 einen zum Nabenteil 4 hin geöffneten Ringraum umgrenzt. Dieser Ringraum ist gegenüber dem Schwungradelement 2 mittels einer Ringlamelle 6 sowie eines Dichtringes 7 abgeschlossen.

Innerhalb des genannten Ringraumes sind am Schwungradelement 1 mittels Bolzen 8 zwei gleichachsige Ringscheiben 9 und 10 gehaltert. Dabei ist die Ringscheibe 10 an dem Bolzen 8 in Axial- und Umfangsrichtung unbeweglich befestigt, während die Ringscheibe 9 auf verdickten Bereichen des Bolzens 8 axial beweglich und lediglich in Umfangsrichtung unbeweglich gehaltert ist. Mittels einer Tellerfeder 11, welche zwischen der Ringscheibe 9 und dem Schwungradelement 1 eingespannt ist, wird die Ringscheibe 9 in Richtung der Ringscheibe 10 gespannt.

Zwischen den Ringscheiben 9 und 10 ist eine weitere Ringscheibe 12 angeordnet, welche im Bereich der Bolzen 8 in Umfangsrichtung erstreckte Langlöcher 13 (vgl. Fig. 2) besitzt und dementsprechend relativ zum Schwungradelement 1 entsprechend der Längenabmessung der Langlöcher 13 begrenzt drehbar ist.

In der Umgebung der Langlöcher 13 sind an der Ringscheibe 12 auf deren beiden Stirnseiten Reibelemente 14 fest angeordnet, welche mit den Ringscheiben 9 und 10, zwischen denen die Ringscheibe 12 mit ihren Reibelementen 14 unter der Spannung der Tellerfeder 11 axial eingespannt ist, nach Art einer Rutschkupplung zusammenwirken. In Umfangsrichtung zwischen den Bolzen 8 bzw. zwischen den Langlöchern 13 sind in den Ringscheiben 9, 10 und 12 tangential zur Scheibenachse ausgerichtete Fenster 15 bzw. 16 angeordnet, welche gleiche Längsabmessungen aufweisen und relativ steife, kurzhubige Schraubenfedern 17 federkäfigartig aufnehmen. Wenn sich die Ringscheibe 12 relativ zu den Ringscheiben 9 und 10 bzw. relativ zum Schwungradelement 1 dreht, so werden die Schraubenfedern 17 jeweils zwischen einer das eine Schraubenende beaufschlagenden radialen Kante eines der Fenster 16 der Ringscheibe 12 und zwischen den das andere Federende beaufschlagenden radialen Kanten der Fenster 15 der Ringscheiben 9 und 10 elastisch gestaucht. Dementsprechend suchen die Schraubenfedern 17 die Ringscheibe 12 in die in Fig. 2 dargestellte Mittellage zu drängen, bei der die Schraubenfedern 17 jeweils mit beiden Enden an den radialen Kanten der Fenster 15 und 16 anliegen und die Fenster 15 und 16 in Achsansicht des Schwungrades miteinander fluchten. In dieser Mittellage nehmen die Bolzen 8 eine Mittelstellung innerhalb der Langlöcher 13 ein.

Radial innerhalb der Ringscheiben 9 und 10 sind mittels Bolzen 18 am Schwungradelement 2 zwei Ringscheiben 19 und 20 axial unbeweglich und undrehbar befestigt. Der Axiale Abstand der Ringscheiben 19 und 20 ist derart bemessen, daß die Ringscheibe 12 von den Ringscheiben 19 und 20 nicht berührt wird.

Die verdickten Bereiche der Bolzen 18 zwischen den Ringscheiben 19 und 20 wirken zur Drehbegrenzung der Ringscheibe 12 relativ zum Schwungradelement 2 mit nach radial innen weisenden Fortsätzen 21 an der Ringscheibe 12 zusammen. Dementsprechend kann sich die Ringscheibe 12 relativ zum Schwungradelement 2 nur um ein begrenztes Maß drehen, welches dem Abstand der Fortsätze 21 in Umfangsrichtung entspricht.

Radial innerhalb der Fenster 16 sind in der Ringscheibe 12 Fenster 22 und 23 und in den Ringscheiben 19 und 20 Fenster 24 angeordnet, die Federn 25 bzw. 26 federkäfigartig aufnehmen. Die Fenster 24 in den Ringscheiben 19 und 20 haben gleiche Länge in Umfangsrichtung wie die Fenster 22 der Ringscheibe 12; dagegen sind die Fenster 23 der Ringscheibe 12 etwas länger, so daß die radialen Kanten der Fenster 23 in der in Fig. 2 dargestellten Mittellage der Ringscheibe 12 bezüglich des Schwungradelementes 2 von den Stirnenden der Federn 26 einen gewissen Abstand in Umfangsrichtung haben. Wenn sich die Ringscheibe 12 relativ zu den Ringscheiben 19 und 20 bzw. dem Schwungradelement 2 dreht, so werden zunächst die relativ wenige Windungen aufweisenden Federn 25 zwischen jeweils einer radialen Kante eines Fensters 22 der Ringscheibe 12 und gegenüberliegenden radialen Kanten der Fenster 24 an den Ringscheiben 19 und 20 gestaucht. Bei größerer Relativdrehung zwischen der Ringscheibe 12 und den Ringscheiben 19 und 20 bzw. dem Schwungradelement 2 wird auch das Spiel der relativ viele Windungen aufweisenden Federn 26 in den Fenstern 23 aufgezehrt, so daß die Federn 26 ebenfalls zwischen einer radialen Kante der Fenster 23 der Ringscheibe 12 und gegenüberliegenden radialen Kanten der Fenster 24 der Ringscheiben 19 und 20 elastisch gestaucht werden.

Am Innenumfangsrand der mit dem Schwungradelement 2 drehfest verbundenen Ringscheibe 19 sind Fortsätze 27 angeordnet, zwischen denen stirnseitige Fortsätze 28′ eines Reibringes 28 mit Spiel in Umfangsrichtung aufgenommen sind. Dieser Reibring 28 wirkt mit einer radialen Ringfläche 29 am Schwungradelement 1 zusammen. Gegen die Ringfläche 29 wird der Reibring mittels einer ringförmigen Tellerfeder 30 gespannt, welche ihrerseits zwischen zwei Scheibenringen 31 und 32 angeordnet ist, die relativ zueinander undrehbar, jedoch axial beweglich angeordnet sind. Dabei liegt der Scheibenring 31 auf der zugewandten Stirnseite des Reibringes 28 auf, während der Scheibenring 32 mit einem Ringsteg an der radial inneren Lagerschale des Rillenkugellagers 3 axial abgestützt ist. An ihren Außenumfangsrändern besitzen die Scheibenringe 31 und 32 gegeneinander gerichtete Fortsätze, die ineinander eingreifen und damit die Scheibenringe 31 und 32 relativ zueinander undrehbar festhalten.

Wenn sich die Ringscheibe 19 bzw. das mit ihr drehfest verbundene Schwungradelement 2 relativ zum Schwungradelement 1 drehen, so dreht sich der Reibring 28 zusammen mit der Ringscheibe 19 bzw. dem Schwungradelement 2, sobald das Spiel der Fortsätze 28′ des Reibringes 28 zwischen den Fortsätzen 27 der Ringscheibe 19 aufgezehrt worden ist. Dementsprechend erfolgt dann eine Relativdrehung zwischen dem Reibring 28 und der Ringfläche 29 bzw. dem Schwungradelement 1, vorausgesetzt, die zwischen den Schwungradelementen 1 und 2 wirkenden Drehmomente sind groß genug, den Reibwiderstand zwischen dem Reibring 28 und Ringfläche 29 zu überwinden.

Die radial innere Lagerschale des Rillenkugellagers 3 wird axial zwischen einem am Schwungradelement 1 befestigten Flanschring 33 und dem bereits genannten Ringsteg des Scheibenringes 32 gesichert, welcher sich axial an einer Ringstufe des Nabenteiles 4 abstützt. Die radial äußere Lagerschale des Rillenkugellagers 3 ist zwischen einem Ringsteg am Innenumfang des Schwungradelementes 2 und dem radial inneren Bereich der Ringscheibe 20 axial festgehalten.

Der Ringraum zwischen dem Schwungradelement 1 und dem Ringscheibenteil 5 kann eine Schmiermittelfüllung 34 aufnehmen. Ein Auslaufen derselben wird durch die Ringlamelle 6 sowie den Dichtring 7 verhindert.

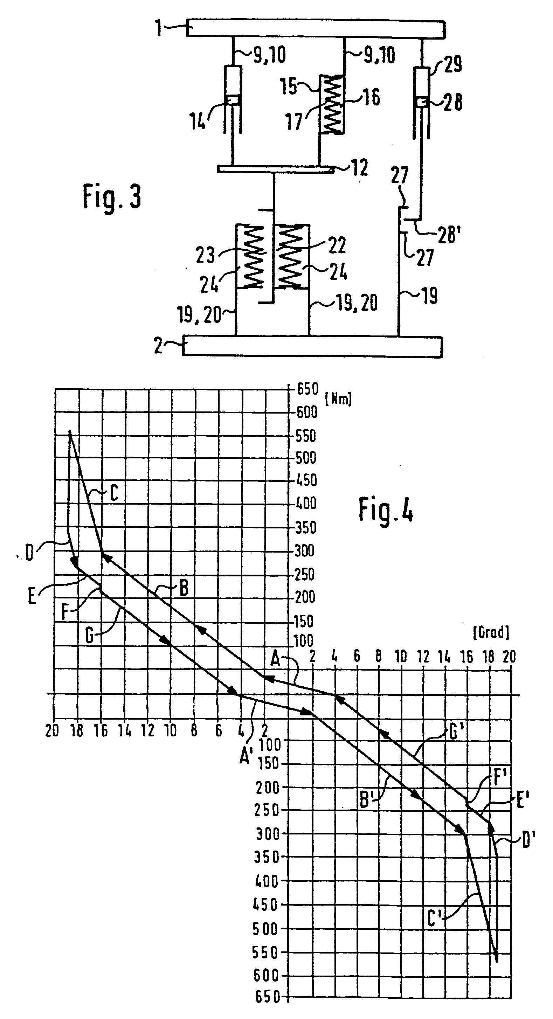

Um die Funktion besser erläutern zu können, ist das in den Figuren 1 und 2 gezeigte geteilte Schwungrad in Fig. 3 nochmals schematisiert dargestellt, wobei die beiden Schwungradelemente 1 und 2 jeweils als schwere Körper gezeichnet sind, welche sich voneinander entfernen bzw. aneinander annähern können. Die in Wirklichkeit zwischen den Schwungradelementen 1 und 2 auftretenden Relativdrehungen sind also in der Darstellung der Fig. 3 als rein translatorische Bewegungen wiedergegeben.

Im übrigen haben einander entsprechende Elemente in der Fig. 3 sowie in den Figuren 1 und 2 gleiche Bezugszeichen.

Wenn sich die Ringscheibe 12 relativ zum Schwungradteil 2 bewegt, so werden zunächst nur die relativ weichen Federn 25 zunehmend gestaucht. Sobald die Relativbewegung zwischen der Ringscheibe 12 und dem Schwungradelement 2 groß genug ist, das den Federn 26 innerhalb der Fenster 23 zur Verfügung stehende Spiel aufzuzehren, werden auch die im Vergleich zu den Federn 25 etwas härteren Federn 26 zunehmend gestaucht.

Solange zwischen den Schwungradelementen 1 und 2 keine übermäßig großen Drehmomente wirksam sind, wird die Ringscheibe 12 durch ihre Reibelemente 14, die mit den Ringscheiben 9 und 10 am Schwungradelement 1 zusammenwirken, relativ zum Schwungradelement 1 unbeweglich festgehalten. Somit werden bei Relativbewegungen zwischen den Schwungradelementen 1 und 2 zunächst nur die Federn 25 und sodann auch die Federn 26 zunehmend gestaucht. Bei hinreichend großen Drehmomenten bzw. Relativbewegungen zwischen den Schwungradelementen 1 und 2 bewegt sich dann auch die Ringscheibe 12 relativ zum Schwungradelement 1, und zwar gegen den Reibwiderstand der Reibelemente 14 an den Ringscheiben 9 und 10 sowie gegen die Kraft der zunehmend gestauchten Federn 17, welche im Vergleich zu den Federn 25 und 26 sehr hart dimensioniert sind.

Im übrigen wird bei größeren Relativbewegungen zwischen den Schwungradelementen 1 und 2 auch das Spiel der Fortsätze 28' des Reibringes 28 zwischen den Fortsätzen 27 an der Ringscheibe 19 aufgezehrt, so daß eine weitere Relativbewegung zwischen zwischen den Schwungradelementen 1 und 2 nur gegen den Reibwiderstand zwischen dem Reibring 28 und der Ringfläche 29 am Schwungradelement 1 erfolgen kann.

Wenn der Motor mit sehr geringer Drehzahl läuft, beispielsweise mit Anlaß- bzw. Leerlaufdrehzahl, so können nur äußerst geringe Drehmomente vom Motor auf den Antriebsstrang übertragen werden. Dementsprechend sind auch zwischen den Schwungradelementen 1 und 2 nur sehr geringe Kräfte wirksam. Diese geringen Kräfte können allein von den relativ weichen Federn 25 aufgenommen werden. Dementsprechend bestimmen die Federn 25 bei geringer Drehzahl des Schwungrades dessen Resonanzfrequenz, die aufgrund der Weichheit der Federn 25 bei sehr geringen Werten liegt, so daß die gegebenenfalls im Antriebsstrang auftretenden bzw. vom Motor angeregten Schwingungen eine Frequenz oberhalb dieser Resonanzfrequenz haben. Dadurch wird gleichzeitig erreicht, daß die Amplituden der zwischen den Schwungradelementen 1 und 2 auftretenden Schwingungen relativ klein bleiben, d.h. geringer als das den Federn 26 in den Fenstern 24 zur Verfügung stehende Spiel. Im übrigen wirkt auch bei relativ geringen Bewegungsamplituden der Schwungradelemente 1 und 2 der Kraftschluß zwischen dem Reibring 28 und der Ringfläche 29, denn das Spiel der Fortsätze 28' zwischen den Fortsätzen 27 ist vergleichsweise gering. Nur bei ganz geringen Schwingungsamplituden bleibt dieser Reibschluß unwirksam, weil die Fortsätze 28' des Reibringes 28 relativ zu den Fortsätzen 27 an der Ringscheibe 19 im Verlauf aufeinanderfolgender Schwingungen unter Drehung des Reibringes 28 relativ zum Schwungradelement 1 in eine Mittellage gebracht werden. Wenn der Motor beim Betrieb mit höheren Drehzahlen läuft und dementsprechend größere Drehmomente übertragen werden können, werden die Schwungradelemente 1 und 2 unter der Wirkung der zwischen ihnen wirkenden Kräfte so weit verstellt, daß sowohl die Federn 25 als auch die Federn 26 gestaucht werden. Damit bestimmen die genannten Federn 25 und 26 gemeinsam die Resonanzfrequenz des Schwungrades bei Schwingungen. Da jedoch die vom Motor angeregten bzw. im Antriebsstrang auftretenden Schwingungen bei höheren Drehzahlen eine höhere Frequenz haben, bleiben diese Schwingungen im überkritischen Bereich, obwohl die Resonanzfrequenz bei gleichzeitig gespannten Federn 25 und 26 ansteigt.

Nur bei extremen Stoßbelastungen bzw. bei längerer Anregung der Resonanzfrequenz werden die Federn 17 zusammen mit den Reibelementen 14, die einen Kraftschluß zu den Ringscheiben 9 und 10 herstellen, wirksam, um Stöße zu dämpfen.

Die Fig. 4 zeigt nun die Torsionskennlinie des erfindungsgemäßen geteilten Schwungrades. Dabei ist auf der Abszisse die relative Verdrehung der Schwungradelemente 1 und 2 aufgetragen, während die Ordinate die jeweils wirksamen Kräfte zeigt.

Zunächst werden die Schwungradelemente aus einer relativen Mittellage verdreht, wobei entsprechend der Kurve A eine langsam ansteigende Kraft überwunden werden muß, die durch die zunehmend gespannten Federn 25 bewirkt wird. Die Kurve A geht nicht durch den Ursprung des Koordinatenkreuzes, weil eine gewisse Grundreibung zwischen den Schwungradelementen 1 und 2 zu überwinden ist; außerdem sei angenommen, daß der Reibring 28 mit seinen Fortsätzen 28' derart an den Fortsätzen 27 der Ringscheibe 19 anliegt, daß zwischen dem Reibring 28 und der Ringfläche 29 des Schwungradelementes 1 eine Relativdrehung gegen Reibwiderstand erfolgt.

Bei größer werdender Relativdrehung zwischen den Schwungradelementen muß eine entsprechend der Kurve B stärker ansteigende Kraft überwunden werden, weil nunmehr sowohl die Federn 25 als auch die Federn 26 zunehmend gespannt werden.

Schließlich müssen auch die stark ansteigenden Kräfte der Federn 17 entsprechend der Kurve C überwunden werden, wobei sich gleichzeitig die Reibelemente 14 zwischen den Ringscheiben 9 und 10 unter Überwindung des entsprechenden Reibwiderstandes verschieben.

Bei Bewegungsumkehr wird nur eine um den Reibwiderstand der Reibelemente 14 zwischen den Ringscheiben 9 und 10 verminderte Rückstellkraft entsprechend dem Kurvenabschnitt D wirksam. Sobald sich die Federn 17 weitestgehend entspannt haben, wird die Rückstellkraft entsprechend dem Kurven abschnitt E nur noch durch die Federn 25 und 26 bestimmt.

Bei der Rückstellung wird zunächst noch nicht der Reibwiderstand zwischen dem Reibring 28 und der Ringfläche 29 wirksam, weil nach einer Bewegungsumkehr den Fortsätzen 28' des Reibringes 28 zwischen den Fortsätzen 27 an der Ringscheibe 19 zunächst das gesamte, den Fortsätzen 28' zwischen den Fortsätzen 27 gegebene Spiel zur Verfügung steht. Sobald dieses Spiel aufgezehrt ist, muß der Reibwiderstand des Reibringes 28 an der Ringfläche 29 zusätzlich überwunden werden; dementsprechend besitzt die Torsionskennlinie die Stufe F.

Bei weiterer Rückstellung entspannen sich die Federn 25 und 26 entsprechend dem Kurvenabschnitt G, bis schließlich die Federn 26 weitestmöglich entspannt sind und für eine weitere Relativbewegung zwischen den Schwungradelementen 1 und 2 zunächst nur die Federn 25 entsprechend dem Kurvenabschnitt A' wirksam sind.

Der weitere Verlauf der Torsionskennlinie entsprechend den Abschnitten B' bis G' entspricht, abgesehen vom Vorzeichenwechsel, dem Verlauf der Abschnitte B bis G.

Abweichend von der dargestellten Ausführungsform können gegebenenfalls die Federn 17 auch weggelassen und die Ringscheibe 12 lediglich reibschlüssig mit dem Schwungradelement gekoppelt werden.

Dabei kann die Anordnung so ausgebildet sein, daß sich die Ringscheibe 12 gegen den Widerstand des Reibschlusses beliebig weit (ohne Drehbegrenzung) relativ zum Schwungradelement 1 drehen kann. Die Stärke des Reibschlusses ist in diesem Falle so bemessen, daß das größte, vom Motor erzeugbare Drehmoment noch ohne Durchrutschen der Ringscheibe 12 relativ zum Schwungradelement übertragen werden kann und eine Relativbewegung zwischen Ringscheibe 12 und Schwungradelement 1 erst bei starken Stoßmomenten oder bei längerer Anregung der Resonanzfrequenz des Schwungrades erfolgt.

**Patentansprüche**

1. Geteiltes Schwungrad zur Dämpfung von Drehschwingungen bei Motoren mit interner verbrennung, mit zwei zueinander gleichachsig angeordneten Schwungradelementen (1,2), auf die die Schwungradmassen im wesentlichen aufgeteilt sind, sowie mit einer zwischen die Schwungradelemente (1,2) geschalteten Federanordnung, welche zumindest zwei parallelgeschaltete Federgruppen (25,26) besitzt, von denen eine mit Spiel behaftet ist, und mit einer zwischen den beiden Schwungradelementen (1,2) wirksamen kraftschlüssigen Kupplung (28-32), dadurch gekennzeichnet, daß die kraftschlüssige Kupplung (28 bis 32) spielbehaftet ist, indem deren Reibelemente bzw. -lamellen (28,29) zumindest mit einem Schwungradelement (2) mit Spiel in Umfangsrichtung verbunden sind und daß die Federkonstanten der Federgruppen (25,26) so bemessen sind, daß die Frequenzen der bei Anlaß- bzw. Leerlaufdrehzahl des Motors erregbaren Schwingungen oberhalb einer niedrigen, durch die spielfreie Federgruppe (25) bestimmten, ersten kritischen Frequenz und die Frequenzen der bei Betriebsdrehzahlen erregbaren Schwingungen oberhalb einer höheren, gemeinsam durch beide Federgruppen (25,26) bestimmten, zweiten kritischen Frequenz des Schwungrades liegen.

2. Schwungrad nach Anspruch 1, dadurch gekennzeichnet, daß das Spiel der Kupplung (28 bis 32) geringer als das Spiel der spielbehafteten Federgruppe (26) ist.

3. Schwungrad nach einem der Ansprüche 1 oder 2, dadurch gekennzeichnet, daß in Reihe zu den parallelgeschalteten Federgruppen (25,26) eine weitere kurzhubige bzw. steife Federgruppe (17) angeordnet ist.

4. Schwungrad nach Anspruch 3, dadurch gekennzeichnet, daß eine den parallelgeschalteten Federgruppen (25,26) sowie der weiteren Federgruppe (17) gemeinsame Widerlageranordnung (Ringscheibe 12) über eine zur weiteren Federgruppe (17) parallele Reibkupplung (9 bis 11, 14) kraftschlüssig mit dem einen Schwungradelement (1) gekoppelt ist.

5. Schwungrad nach einem der Ansprüche 1 oder 2, dadurch gekennzeichnet, daß in Reihe zu den parallelgeschalteten Federgruppen (25,26) eine kraftschlüssige Kupplung (9 bis 12, 14) zwischen einer den parallelgeschalteten Federgruppen (25,26) gemeinsamen Widerlageranordnung (Ringscheibe 12) und dem einen Schwungradelement (1) angeordnet ist.

6. Schwungrad nach Anspruch 5, dadurch gekennzeichnet, daß die in Reihe zu den parallelgeschalteten Federgruppen (25,26) angeordnete kraftschlüssige Kupplung (9 bis 12, 14) ohne Drehbegrenzung angeordnet ist.

## Claims

1. Divided flywheel for damping rotary vibrations in engines with internal combustion, having two flywheel elements (1, 2) arranged coaxially with each other, between which the flywheel weights are substantially distributed, also having a spring arrangement connected between the flywheel elements (1, 2) which has at least two groups of springs (25, 26) connected in parallel, one of which has play, and having a frictional coupling (28-32) operative between the two flywheel elements (1, 2), characterized in that the frictional coupling (28 to 32) has play, its friction elements or friction lamellae (28, 29) being connected with play in the circumferential direction to at least one flywheel element (2), and that the spring constants of the groups of springs (25, 26) are dimensioned so that the frequencies of the vibrations which can be generated at the starting speed and no-load speed of the engine lie above a low first critical frequency determined by the group of springs (25) without play and the frequencies of the vibrations which can be generated at service speeds lie above a higher second critical frequency of the flywheel determined by both groups of springs (25, 26) conjointly.

2. Flywheel according to Claim 1, characterized in that the play of the coupling (28 to 32) is smaller than the play of the group of springs (26) with play.

3. Flywheel according to either Claim 1 or 2, characterized in that a further short-stroke and/or rigid group of springs (17) is arranged in series with the groups of springs (25, 26) which are connected in parallel.

4. Flywheel according to Claim 3, characterized in that an abutment arrangement (ring plate 12) common to the groups of springs (25, 26) which are connected in parallel and to the further group of springs (17) is coupled frictionally to the one flywheel element (1) by a friction coupling (9 to 11, 14) parallel to the further group of springs (17).

5. Flywheel according to either Claim 1 or 2, characterized in that a frictional coupling (9 to 12, 14) is arranged, in series with the groups of springs (25, 26) which are connected in parallel, between an abutment arrangement (ring plate 12) common to the groups of springs (25, 26) and the one flywheel element (1).

6. Flywheel according to Claim 5, characterized in that the frictional coupling (9 to 12, 14) which is arranged in series with the groups of springs (25, 26) which are connected in parallel is arranged without rotational limitation.

## Revendications

1. Volant d'inertie en plusieurs parties, pour l'amortissement des vibrations de torsion de moteurs à combustion interne, avec deux éléments de volant d'inertie (1, 2) disposés coaxialement et sur lesquels les masses de volant d'inertie sont pour l'essentiel réparties, ainsi qu'avec un ensemble de ressorts qui est monté entre les éléments de volant d'inertie (1, 2) et possède au moins deux groupes de ressorts (25, 26) montés en parallèle et dont l'un présente un jeu, et avec un accouplement par adhérence (28 à 32) agissant entre les deux éléments de volant d'inertie (1, 2), **caractérisé** en ce que l'accouplement par adhérence (28 à 32) présente un jeu, par le fait que ses éléments ou disques de friction (28, 29) sont reliés avec jeu en direction circonférentielle à au moins un élément de volant d'inertie (2). et en ce que les constantes de ressort des groupes de ressorts (25, 26) sont dimensionnées de telle sorte que les fréquences des vibrations pouvant être excitées au régime de démarrage ou de ralenti du moteur se situent au-dessus d'une première fréquence critique basse, déterminée par le groupe de ressorts (25) sans jeu, et les fréquences des vibrations pouvant être excitées aux régimes de service se situent audessus d'une seconde fréquence critique plus élevée, déterminée conjointement par les deux groupes de ressorts (25, 26).

2. Volant d'inertie selon la revendication 1, **caractérisé** en ce que le jeu de l'accouplement (28 à 32) est inférieur au jeu du groupe de ressorts (26) présentant un jeu.

3. Volant d'inertie selon la revendication 1 ou 2, **caractérisé** en ce qu'un groupe de ressorts supplémentaire (17), à course courte ou rigide, est monté en série avec les groupes de ressorts (25, 26) montés en parallèle.

4. Volant d'inertie selon la revendication 3, **caractérisé** en ce qu'un élément de contre-appui (couronne 12), commun aux groupes de ressorts (25, 26) montés en parallèle et eu groupe de ressorts supplémentaire (17), est accouplé par adhérence à l'un (1) des éléments de volant d'inertie par l'intermédiaire d'un accouplement à friction (9 à 11, 14) parallèle au groupe de ressorts supplémentaire (17).

5. Volant d'inertie selon la revendication 1 ou 2, **caractérisé** en ce qu'un accouplement par adhérence (9 à 11, 14) est monté, en série avec les groupes de ressorts (25, 26) montés en parallèle, entre l'un (1) des éléments de volant d'inertie et un élément de contre-appui (couronne 12) commun aux groupes de ressorts (25, 26) montés en parallèle.

6. Volant d'inertie selon la revendication 5, **caractérisé** en ce que l'accouplement par adhérence (9 à 12, 14) monté en série avec les groupes de ressorts (25, 26) montés en parallèle est disposé sans limitation de rotation.

Fig.1

Fig. 2

Fig. 3

Fig. 4